# EUROPEAN PATENT APPLICATION

(11) **EP 2 767 363 A1**
(43) Date of publication of application: **20.08.2014**
(21) Application number: 12839427.7
(22) Date of filing: 05.10.2012
(51) Int. Cl.: B23K 26/38, B05C 1/02, B21D 28/36, B23K 26/16, B23P 23/04

(54) **LASER/PUNCH PROCESSING METHOD, LASER/PUNCH COMPOSITE PROCESSING MACHINE AND ADHESION TOOL**

(30) Priority: 14.10.2011 JP 2011226523; 14.10.2011 JP 2011226531
(71) Applicant: Amada Company, Limited, Isehara-shi, Kanagawa 259-1196 (JP)
(72) Inventor: TAKOH, Yoichi, Isehara-shi Kanagawa 259-1196 (JP); KOMIYA, Hidenori, Isehara-shi Kanagawa 259-1196 (JP); NAKAI, Hiroshi, Isehara-shi Kanagawa 259-1196 (JP)
(74) Representative: Grünecker, Kinkeldey, Stockmair & Schwanhäusser
(86) International application number: PCT/JP2012/075973
(87) International publication number: WO 2013/054762

(57) **Abstract**

A laser-punch processing method for processing a sheet work with a laser-punch-combined processing machine includes a process of carrying out a punching process on the work, a process of positioning a laser cutting start position of the work under an application tool body 27 that is vertically movably provided for the laser-punch-combined processing machine 1, bringing an application tool contact part of the application tool body into contact with a top face of the work, and applying a spatter deposition inhibitor of the application tool contact part to a predetermined range around the laser cutting start position, and a process of laser-cutting the work along a product contour that contains the punching process position.

## Description

### TECHNICAL FIELD

The present invention relates a laser-punch-combined processing machine that is a combination of a laser cutting machine to cut a sheet work with a laser and a punching machine to punch the work and a laser-punch processing method that is carried out with the laser-punch-combined processing machine, and particularly, to a laser-punch processing method that prevents spatters caused during a piercing process conducted at the start of a laser cutting process from depositing on a work surface, a laser-punch-combined processing machine used with the method, and an application tool used with the machine.

### BACKGROUND ART

Generally, laser-cutting of a sheet work with a laser-punch-combined processing machine is carried out by punching the work, and thereafter, by cutting the work with a laser along a product contour that contains the punched location. The laser-cutting of the work is carried out by piercing the work to form a through hole at a laser-cutting start position of the work, and thereafter, by laser-cutting the work along the product contour.

Until the through hole formed by the piercing process at the laser-cutting start position reaches a back face (bottom face) of the work, melted metal due to a laser beam irradiation is spattered with a high-pressure gas jetted to the pierced location. The spatters drop and deposit on the top face of the work. The deposited spatters on the top face of the work are hardly blown off with the high-pressure gas. A gap between the top face of the work and a laser processing head is measured with a gap sensor and the gap is maintained to carry out a copying process. During this process, spatters deposited on the top face of the work affect to change processing conditions and deteriorate the quality of the process.

To prevent spatters from depositing on the surface of a work, Japanese Unexamined Patent Application Publication No. 2004-230413 (Patent Literature 1), for example, proposes a technique of applying a spatter inhibitor to the work surface.

### SUMMARY OF INVENTION

### Problems to be Solved by Invention

The related art described in the Patent Literature 1 sprays the spatter inhibitor to a work to cover a processing face of the work with the spatter inhibitor. In addition, the related art coats spatters to be produced with the spatter inhibitor. Although the related art is able to prevent spatters from depositing on the work surface, it consumes a large amount of the spatter inhibitor and necessitates a removal of the spatter inhibitor remaining on the work surface. Accordingly, the related art needs a further improvement.

### Means to Solve Problems

In consideration of the problems of the related art mentioned above, a technical aspect of the present invention provides a laser-punch processing method for processing a sheet work with a laser-punch-combined processing machine. The method includes (a) a process of carrying out a punching process on the work, (b) a process of positioning a laser cutting start position of the work under an application tool body that is vertically movably provided for the laser-punch-combined processing machine, bringing an application tool contact part of the application tool body into contact with a top face of the work, and applying a spatter deposition inhibitor of the application tool contact part to a predetermined range around the laser cutting start position, and (c) a process of laser-cutting the work along a product contour that contains the punching process position.

Another technical aspect of the present invention provides a piercing method of laser-piercing a sheet work. The method includes (a) a process of moving an application tool toward the work, the work being able to be moved and positioned in X- and Y-axis directions relative to a laser processing head, the application tool being arranged to be movable in a Z-axis direction toward and away from the work, (b) a process of bringing a contact member arranged at a front end of the application tool into contact with a piercing position of the work and applying a spatter deposition inhibitor kept in the contact member to a surrounding area containing the piercing position, and (c) a process of moving and positioning the piercing position of the work where the spatter deposition inhibitor has been applied to a position corresponding to the laser processing head and starting a laser-piercing process on the work.

### BRIEF DESCRIPTION OF DRAWINGS

Figure 1 is an explanatory plan view conceptually and schematically illustrating a laser-punch-combined processing machine according to an embodiment of the present invention.
Figure 2 is an explanatory sectional view illustrating an application tool according to a first embodiment of the present invention.

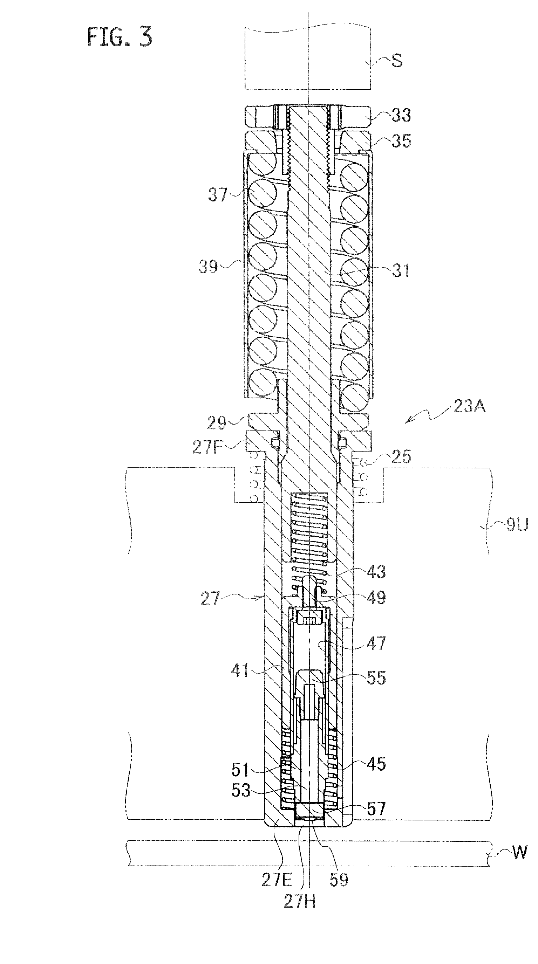

Figure 3 is an explanatory sectional view illustrating an application tool according to a second embodiment of the present invention.
Figure 4 is an explanatory sectional view illustrating an application tool according to a third embodiment of the present invention.
Figure 5 is an explanatory sectional view illustrating an application tool according to a fourth embodiment of the present invention.
Figure 6 is an explanatory sectional view illustrating an application tool according to a fifth embodiment of the present invention.
Figure 7 is an explanatory sectional view illustrating an application tool according to a sixth embodiment of the present invention.

### MODE OF IMPLEMENTING INVENTION

A laser-punch-combined processing machine according to an embodiment of the present invention will be explained with reference to the drawings. Although a general configuration of the laser-punch-combined processing machine is known, the general configuration will briefly be explained for the sake of easy understanding.

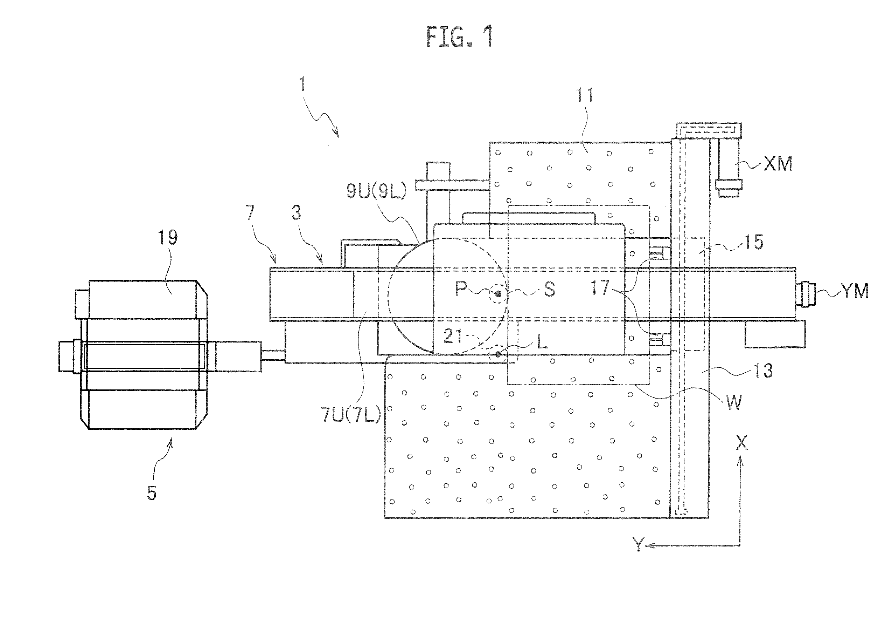

As illustrated as a plan view in Fig. 1, the laser-punch-combined processing machine 1 according to the embodiment of the present invention is a combination of a punching machine (punch press) 3 for punching a sheet work W and a laser cutting machine 5 for laser-cutting the work. According to the present embodiments, the punch press 3 is a turret punch press.

The turret punch press 3 has a gantry frame body 7 including an upper frame 7U and a lower frame 7L that are vertically spaced away from each other. The upper frame 7U of the frame body 7 has a horizontally turnable upper turret 9U serving as a punch holder that holds a plurality of punches (upper metal molds) so that the punches are vertically movable and are detachable and replaceable. The lower frame 7L has a horizontally turnable lower turret 9L serving as a die holder that holds a plurality of dies (lower metal molds) corresponding to the punches, respectively, so that the dies are detachable and replaceable.

The upper and lower turrets 9U and 9L are turned so that the punch and die that form a pair are indexed and positioned to a punching position P. To punch the work W with the pair of punch and die, there is arranged a striker S that is vertically moved to hit and press the punch. The striker S is able to adjust a descending position of the punch as well as a vertical position of the striker S itself. Namely, the striker S is adjustable to a required vertical position by controlling a vertical motion actuator that vertically moves the striker S.

With respect to the punching position P, the work W is moved in X- and Y-axis directions. For this, the punch press 3 has a work table 11 for supporting the work W. The punch press 3 also has a carriage base 13 that is moved and positioned by a Y-axis motor YM in the Y-axis direction toward and away from the punching position P. The carriage base 13 is long in the X-axis direction and has an X-axis motor XM and a carriage 15 that is moved and positioned by the X-axis motor XM in the X-axis direction. The carriage 15 has a plurality of work clamps 17 that are movable toward and away from one another and are able to clamp an edge of the work W.

The laser cutting machine 5 has a laser oscillator 19 and a laser processing head 21 that is arranged at a laser processing position L in the vicinity of the punching position P. The laser oscillator 19 and laser processing head 21 are optically connected to each other through a proper optical path such as a combination of a plurality of reflection mirrors and beam ducts, or an optical fiber, to guide a laser beam generated by the laser oscillator 19 to the laser processing head 21.

With this configuration, the work W clamped with the work clamps 17 is able to be moved in the X- and Y-axis directions and a processing position of the work W is able to be positioned to the punching position P and punched, or to the laser processing position and laser-processed.

### (First Embodiment)

The laser-punch-combined processing machine 1 punches the work W at the punching position P, and thereafter, laser-cuts the work at the laser processing position L along a product contour that contains the punched part. At the start of the laser-cutting of the work W at the laser processing position L, a piercing process is carried out. Until a through hole to form reaches a back face (bottom face) of the work W, the piercing process produces spatters that may deposit on a top face of the work W.

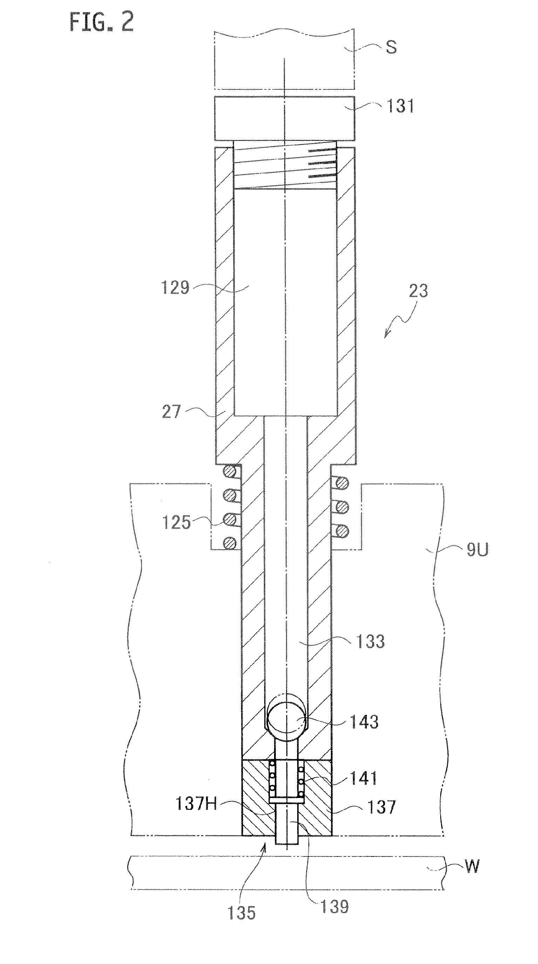

To prevent the spatters from depositing on the work W, the laser-punch-combined processing machine 1 is provided with a spatter deposition preventive means. More precisely, the upper turret 9U serving as a punch holder is provided with an application tool 23 (refer to Fig. 2) for applying a spatter deposition inhibitor to the top face of the work W, and the application tool 23 is vertically movable, detachable, and replaceable. As illustrated in Fig. 2, the application tool 23 according to the present embodiment has an application tool body 27 that is vertically movably supported through a lifter spring 125 on the upper turret 9U.

The application tool body 27 includes a large-diameter reservoir 129 to keep the spatter deposition inhibitor, which may be the one described in the Patent Literature 1, or dimethyl silicon oil, or any other. Screwed into an upper part of the reservoir 129 is an upper cap 131 that is pressed by the striker S that is vertically movably arranged on the punch press 3. The reservoir 129 communicates with a vertical communication hole 133 formed in the application tool body 27. Arranged at a lower end of the communication hole 133 is an application tool contact part 135 that comes into contact with the top face of the work W and applies the spatter deposition inhibitor to the work W.

The application tool contact part 135 is configured to prevent the spatter deposition inhibitor from continuously flowing out of the communication hole 133, and when it comes into contact with the top face of the work W, apply the spatter deposition inhibitor to the work W. According to the present embodiment, a lower end face of the application tool body 27 is provided with a holder block 137 that is detachably attached with a fixture such as a screw (not illustrated). The holder block 137 has a vertical through hole 137H into which a contact member 139 is inserted. The contact member 139 is vertically movable and is made of proper material such as porous material to allow the spatter deposition inhibitor to seep.

The contact member 139 is always downwardly pressed by a resilient member 141 such as a coil spring arranged between the contact member 139 and the bottom face of the application tool body 27 so that a lower end of the contact member 139 always protrudes from a bottom face of the holder block 137. An upper end of the contact member 139 is able to enter the communication hole 133 from below the same. The upper end of the contact member 139 is configured to lift a poppet valve 143 that is vertically movably arranged at a lower end of the communication hole 133 and is made of, for example, a ball.

With the above-mentioned configuration, the work W is punched at the punching position P, and thereafter, is laser-cut at the laser processing position L. Before the laser-cutting, the application tool 23 arranged on the upper turret 9U is indexed and positioned to the punching position P. A position of the work W at which a piercing process is carried out as an initial process of the laser cutting is set under the application tool 23. Thereafter, the striker S, which is vertically movably provided for the punch press 3, is driven to lower the application tool body 27 of the application tool 23 against the lifter spring 125. Then, the bottom face of the contact member 139 of the application tool 23 comes into contact with a top face of the piercing start position of the work W.

When the bottom face of the contact member 139 comes into contact with the top face of the work W, the spatter deposition inhibitor contained in the contact member 139 is applied to the top face of the work W. As the bottom face of the contact member 139 is in contact with the top face of the work W, the application tool body 27 is further pushed downward so that the contact member 139 is lifted to push up the poppet valve 143. As a result, the spatter deposition inhibitor in the communication hole 133 flows toward the contact member 139. Thereafter, the striker S is lifted to an original position and the contact member 139, poppet valve 143, and the like also return to their respective original position.

As will already be understood, the spatter deposition inhibitor is applied to the piercing start position on the work W without moving the contact member 139 along the top face of the work W, i.e., without rubbing the work W with the contact member 139. Instead, the contact member 139 is moved in an approaching/separating direction (Z) with respect to the top face of the work W, and when the contact member 139 comes into contact with the top face of the work W, the spatter deposition inhibitor is applied to the piercing start position. This suppresses a consumption of the spatter deposition inhibitor applied to the piercing start position on the top face of the work W. Applying the spatter deposition inhibitor to the piercing start position on the work W prevents spatters produced during the piercing process from depositing on the top face of the work W.

If an area of the spatter deposition inhibitor applied to the work W by bringing the bottom face of the contact member 139 into contact with the top face of the work W is larger than necessity, a consumption of the spatter deposition inhibitor will increase. For this, templates having holes of 1.6 mm, 2.0 mm, and 3.0 mm in diameter were prepared, the spatter deposition inhibitor was applied through the templates to the top face of a work, and the work was pierced. In the cases of the templates having hole diameters of 1.6 mm and 2.0 mm, an effect of preventing spatters from depositing on the top face of the work was confirmed in the area where the spatter deposition inhibitor was applied. However, the spatters sometimes deposited on the top face of the work outside the diameter of each hole. In the case of the template having hole diameter of 3.0 mm, no spatter deposited on the top face of the work even outside the hole.

It is preferable, therefore, that the diameter of the part where the contact member 139 comes into contact with the top face of the work W and where the spatter deposition inhibitor is applied is at least 3 mm.

As is understood from the above explanation, the spatter deposition inhibitor is applied to the piercing start position without spraying the spatter deposition inhibitor over the position or rubbing the same thereon. Instead, the contact member 139 is vertically moved and is brought into contact with the piercing start position so that the spatter deposition inhibitor is applied to the position. This suppresses a consumption of the spatter deposition inhibitor, prevents an excessive application of the inhibitor, and applies a proper quantity of the inhibitor to the piercing start position. As a result, the above-mentioned problems of the related art are solved.

The present invention is not limited to the embodiment mentioned above. Proper amendments may be made to achieve the present invention in other forms. For example, the punch press is not limited to the turret punch press. The present invention is applicable to a combined processing machine that moves a work in one of X- and Y-directions and a punching head and laser head in the other of the X- and Y-directions. Namely, the present invention is applicable to various forms of combined processing machines.

According to the present embodiment, the application tool 23 is arranged on the upper turret 9U serving as a punch holder. Instead of the punch holder, the application tool 23 may be arranged on the frame body 7 so that a vertical motion actuator provided for the frame body 7 vertically moves the application tool 23. In this way, the present invention allows proper modifications to achieve the present invention in various forms.

### (Second Embodiment)

An application tool 23A according to the second embodiment has an application tool body 27 that is vertically movably supported by the upper turret 9U that is a part of a machine body of the laser processing machine 5. The laser processing machine 5 has the laser processing head 21 that is movable in X-, Y-, and Z-axis directions with respect to the work W. According to this embodiment, the punch press 3 and laser processing machine 5 are combined into the combined processing machine. When the laser processing machine 5 is viewed as a main machine, the upper turret 9U of the punch press 3 may be deemed as a part of the machine body of the laser processing machine 5.

If the laser processing machine 5 is separated as a single machine, a part of a machine body thereof in the vicinity of the laser processing head 21 is provided with a support member such as a support bracket to vertically movably support the application tool 23, which is vertically moved by a proper vertical motion actuator. In this case, the support member forms a part of the machine body of the laser processing machine.

The application tool 23A is arranged to move back and forth in the same direction as a laser beam emitting direction from the laser processing head 21 to the work W. According to the present embodiment, the direction is a vertical direction, i.e., the Z-axis direction toward and away from the surface (top face) of the work W. The application tool body 27 has, at an upper end thereof, a flange 27F supported with the lifter spring 25. Inserted in the application tool body 27 is a lower end of a shaft-like vertical driver 31. The vertical driver 31 vertically passes through a retainer collar 29 that is detachably attached to the flange 27F.

Screwed into an upper end of the vertical driver 31 is a head member 33 whose vertical position is adjustable. A lower face of the head member 33 is in contact with a spring seat 35. Arranged between the spring seat 35 and the retainer collar 29 is a resilient member 37 such as a strong coil spring. A lower face of the spring seat 35 is provided with a cylindrical cover 39 to surround the resilient member 37. The head member 33 is pressed by the striker S that is arranged on the punch press so that the striker S is vertically movable and a vertical position thereof is adjustable.

Arranged in the application tool body 27 between the vertical driver 31 and a plate presser 27E at a lower end of the application tool body 27 is a holder cylinder 41 that is vertically movable. Arranged between an upper face of the holder cylinder 41 and a lower part of the vertical driver 31 is a resilient member 43 serving as a damper. Arranged between a lower face of the holder cylinder 41 and the plate presser 27E is a return resilient member 45.

In the holder cylinder 41, a hold member 47 is detachably fixed with a fixture 49 such as a fastening screw. Detachably held at a front end (lower end) of the hold member 47 is a cylindrical holder container 51 that is replaceable and defines a reservoir 53.

The reservoir 53 stores a spatter deposition inhibitor, which is a proper one such as the spatter inhibitor described in the Patent Literature 1, dimethyl silicon oil, or the like. A configuration of storing the spatter deposition inhibitor in the reservoir 53 is optional. For example, the spatter deposition inhibitor is poured into the reservoir 53, or a material such as cotton impregnated with the spatter deposition inhibitor is inserted in the reservoir 53 so that the spatter deposition inhibitor may ooze therefrom.

An upper part of the holder container 51 is provided with an upper lid 55 and a lower part of the holder container 51 is provided with a contact member holder 57. A lower face of the contact member holder 57 is provided with a contact member 59. The contact member 59 is made of a proper material such as a porous material having a function of keeping the spatter deposition inhibitor oozing from the reservoir 53. When comes into contact with the surface of the work W, the contact member 59 functions to apply the spatter deposition inhibitor kept therein to the surface of the work W.

With the above-mentioned configuration, a processing position of the work W is positioned to the punching position P of the punch press 3 and the work W is punched. Thereafter, the work W is laser-cut by the laser processing machine 5 along a product contour that contains the punched position. At this time, the work W is pierced. Until a through hole is pierced through the work W, spatters spread over the surface of the work W and the spatters may deposit around the pierced position.

To deal with this, the upper turret 9U is turned so that the application tool 23A supported with the upper turret 9U is indexed and position to the punching position P. The work W is moved in the X- and Y-axis directions so that the position of the work W to be pierced is set under the application tool 23A. Thereafter, the striker S of the punch press 3 is lowered to downwardly press the head member 33 of the application tool 23A. Then, the lifter spring 25 is compressed, the application tool body 27 is lowered, and the plate presser 27E of the application tool body 27 comes into contact with the top face (surface) of the work W and presses the work W against a die supported with the lower turret 9L.

The striker S is further lowered, the resilient member 37 is gradually compressed, and the vertical driver 31 is gradually lowered. When the vertical driver 31 is lowered, the lower resilient member 45 is gradually lowered to gradually lower the holder cylinder 41 because the upper resilient member 43 is stronger than the lower resilient member 45. The contact member 59 is lowered in a through hole 27H vertically formed at a lower end of the application tool body 27 and comes into contact with the top face of the work W. As a result, the spatter deposition inhibitor impregnated (contained) in the contact member 59 is applied to the top face of the work W.

If the striker S is further lowered with the contact member 59 being in contact with the top face of the work W, the upper resilient member 43 is compressed to absorb the lowering of the vertical driver 31. Thereafter, the striker S is lifted to an original position so that the application tool 23A is lifted to an original position and the holder cylinder 41 and the like are also lifted to their respective original positions.

As is already understood, the spatter deposition inhibitor is applied to the piercing start position on the work W without moving the contact member 59 along the top face of the work W or rubbing the contact member 59 on the work W. Instead, the inhibitor is applied to the piercing start position only by the contact motion of moving the contact member 59 to the top face of the work W. This suppresses a consumption of the spatter deposition inhibitor applied to the piercing start position on the top face of the work W. The spatter deposition inhibitor applied to the piercing start position on the work W prevents spatters produced during the piercing process from depositing on the top face of the work W.

If an area of the spatter deposition inhibitor applied by bringing the bottom face of the contact member 59 in contact with the top face of the work W is larger than necessity, a consumption of the spatter deposition inhibitor will increase. For this, templates having holes of 1.6 mm, 2.0 mm, and 3.0 mm in diameter were prepared, the spatter deposition inhibitor was applied through the templates to the top face of a work, and the work was pierced. In the cases of the templates having hole diameters of 1.6 mm and 2.0 mm, an effect of preventing spatters from depositing on the top face of the work was confirmed in the area where the spatter deposition inhibitor was applied. However, the spatters sometimes deposited on the top face of the work outside the diameter of each hole. In the case of the template having hole diameter of 3.0 mm, no spatter deposited on the top face of the work even outside the hole.

It is preferable, therefore, that the diameter of the part where the contact member 59 comes into contact with the top face of the work W and the spatter deposition inhibitor is applied is at least 3 mm. When the spatter deposition inhibitor is applied in the range of 3 mm in diameter, spatters spreading outside the diameter of 3.0 mm cool until they drop on the top face of the work W, and therefore, do not deposit on the top face of the work W.

As is understood from the above explanation, the spatter deposition inhibitor is applied to the piercing start position without spraying the spatter deposition inhibitor over the position or rubbing the same thereon. Instead, the contact member 59 is vertically moved and is brought into contact with the piercing start position so that the spatter deposition inhibitor is applied to the position. Namely, only the contact motion of the contact member 59 to the top face of the work W applies the spatter deposition inhibitor to the top face of the work. This suppresses a consumption of the spatter deposition inhibitor, prevents an excessive application of the inhibitor, and applies a proper quantity of the inhibitor to the piercing start position. As a result, the above-mentioned problems of the related art are solved.

The present invention is not limited to the present embodiment. Proper amendments may be made to achieve the present invention in other forms. According to the embodiment, the application tool 23A is arranged on the upper turret 9U serving as a punch holder. Instead of the punch holder, the application tool 23A may be arranged at a proper position on the frame body 7 or laser processing head 21 so that a vertical motion actuator provided for the frame body 7 vertically moves the application tool 23A. In this way, the present invention allows proper modifications to achieve the invention in various forms.

### (Third Embodiment)

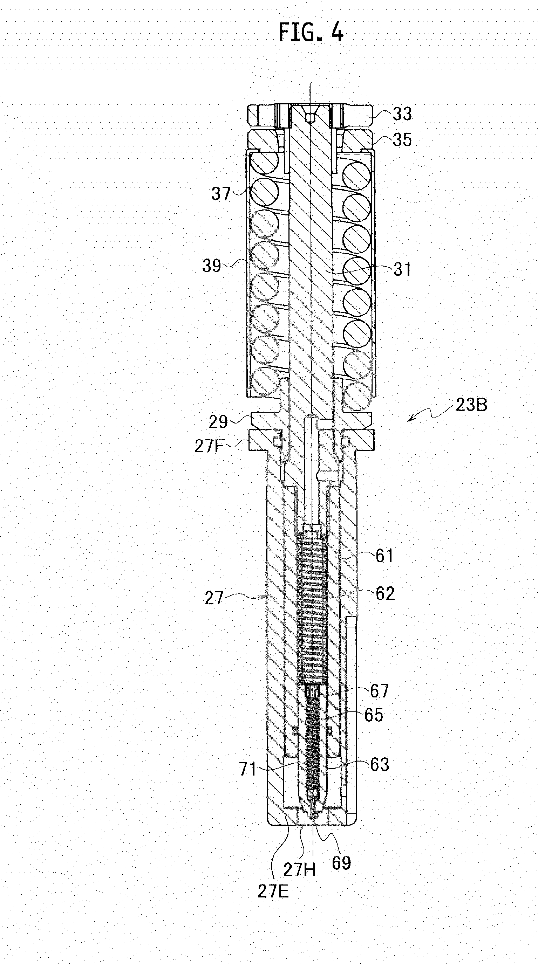

Figure 4 illustrates an application tool according to the third embodiment. In the application tool 23B of the third embodiment, elements having the same functions as those of the application tool 23A mentioned above are represented with the same reference marks to omit overlapping explanations.

In the application tool 23B according to the third embodiment, an application tool body 27 incorporates a holder cylinder 61 that is vertically movable. An upper end of the holder cylinder 61 is screwed to a lower end of a vertical driver 31. Inserted into a lower part of the holder cylinder 61 is a holder container 63 whose downward movement is restricted. Arranged between the holder cylinder 63 and the vertical driver 31 is a resilient member 62 that always presses the holder container 63 in a downward direction. A lower end of the holder container 63 downwardly protrudes from the holder cylinder 61 and faces a through hole 27H formed at a lower end of the application tool body 27.

The holder container 63 includes a hollow reservoir 65. Screwed to an upper part of the reservoir 65 is an annular spring seat 67. The holder container 63 has a needle-valve-like contact member 69 which is vertically movable and whose front end protrudes from a front end of the holder container 63. Arranged between the spring seat 67 and the contact member 69 is a resilient member 71 such as a coil spring.

With the above-mentioned configuration, a plate presser 27E of the application tool body 27 is brought into contact with a top face of a work W, the holder cylinder 61 is lowered relative to the application tool body 27, the front end (lower end) of the holder container 63 comes into contact with the top face of the work W, and the contact member 69 relatively ascends against the pressing force of the resilient member 71. At this time, a spatter deposition inhibitor in the reservoir 65 oozes from around the contact member 69 and attaches to the top face of the work W, thereby providing an effect similar to that provided by the application tools 23 and 23A.

### (Fourth Embodiment)

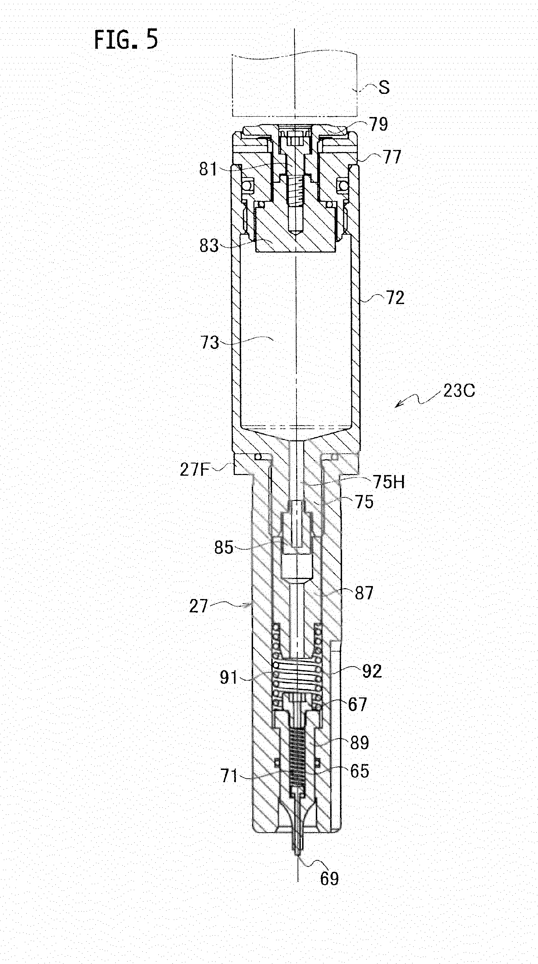

Figure 5 illustrates an application tool according to the fourth embodiment. In the application tool 23C of the fourth embodiment, elements having the same functions as those of the above mentioned application tools are represented with the same reference marks to omit overlapping explanations.

In the application tool 23C, an upper part of an application tool body 27 is provided with a cylindrical tank member 72. More precisely, the tank member 72 is cylindrical and has a chamber 73 to store a spatter deposition inhibitor. A lower face of the tank member 72 has a downwardly protruding shaft 75. The shaft 75 is detachably screwed and fixed to the application tool body 27. An upper part of the chamber 73 is closed with a lid member 77 that is screwed and fixed to the upper part of the tank member 72. The lid member 77 is provided with a head member 79 that is vertically movable and is upwardly pushed with a pushing means such as a plate spring. At a central part of the head member 79, an adjust screw 81 is rotatably arranged. A lower part of the adjust screw 81 has a threaded part to which an open/close valve member 83 is screwed so that the valve member 83 vertically moves to open and close a gap between the chamber 73 and the lid member 77.

With the above-mentioned configuration, the striker S slightly lowers the head member 79 against pushing force to open the gap between the lid member 77 and the open/close valve member 83 so that the chamber 73 temporarily communicates with the outside air. Even when the spatter deposition inhibitor oozes out of the chamber 73, no negative pressure is produced in the chamber 73.

The shaft 75 of the tank member 72 has a vertical communication hole 75H communicating with the chamber 73. Screwed to a lower end of the shaft 75 is an adjust valve member 85 that is vertically adjustable to adjust a dripping quantity of the spatter deposition inhibitor dripping through the communication hole 75H. The adjust valve member 85 adjusts a small gap between the shaft 75 and the adjust valve member 85, thereby adjusting a dripping quantity of the spatter deposition inhibitor.

The application tool body 27 incorporates a hollow shaft member 87 that is vertically movable to get into contact with a lower face of the shaft 75. A lower part of the application tool body 27 accommodates a holder container 89 that is vertically movable. Defined between the holder container 89 and the hollow shaft member 87 is a reservoir 92 which contains a resilient member 91 such as a coil spring to push the holder container 89 and hollow member 87 away from each other. A lower end (front end) of the holder container 89 downwardly protrudes from a lower face of the application tool body 27. The holder container 89 is configured similar to the holder container 63 mentioned above and has a contact member 69 that is vertically movable and protrudes from a front end of the holder container 89. In addition, the holder container 89 has a reservoir 65 incorporating a spring seat 67 and resilient member 71.

According to the application tool 23C, the striker S lowers the application tool body 27, a lower end of the holder container 89 comes into contact with a top face of a work W, the contact member 69 ascends against the pushing force of the resilient member 71, and the spatter deposition inhibitor is applied to the top face of the work W similar to the application tool 23B mentioned above. According to the application tool 23C, the chamber 73 has a large capacity, and therefore, is able to apply the spatter deposition inhibitor for a long time.

### (Fifth Embodiment)

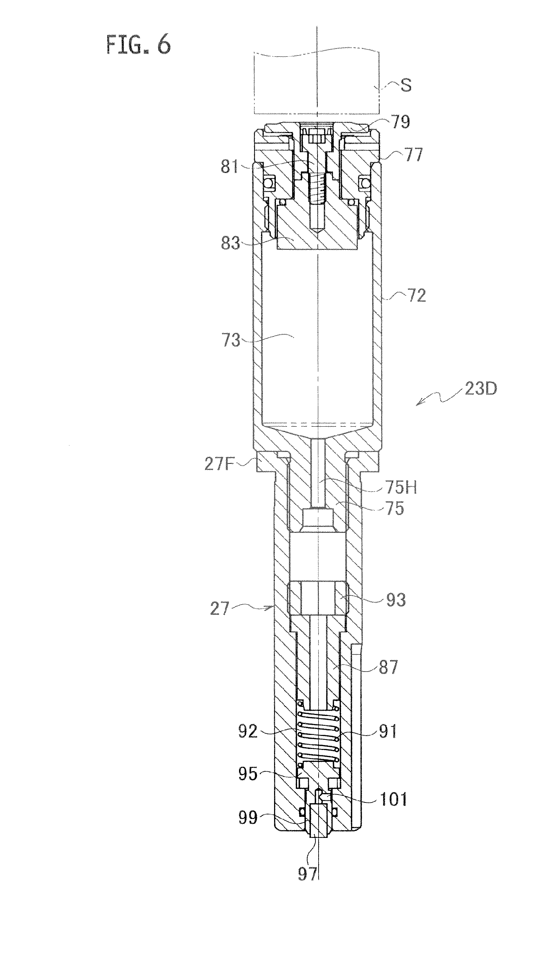

Figure 6 illustrates an application tool according to the fifth embodiment. In the application tool 23D of the fifth embodiment, elements having the same functions as those of the above mentioned application tools are represented with the same reference marks to omit overlapping explanations.

In the application tool 23D of the fifth embodiment, a hollow shaft member 87 is fixed inside an application tool body 27 with an annular fixture 93. A lower end of the application tool body 27 has a sliding shaft member 95 that is movable in an axial direction. Arranged between the hollow shaft member 87 and the sliding shaft member 95 is a resilient member 91. Formed in a lower face of the sliding shaft member 95 is a burying hole 99 in which a contact member 97 corresponding to the above-mentioned contact member 59 is buried. The burying hole 99 has an introduction hole 101 to introduce a spatter deposition inhibitor from a reservoir 92 that incorporates the resilient member 91. A lower face (front end face) of the contact member 97 always protrudes from a lower face (front end face) of the application tool body 27.

According to this configuration, the front end face of the application tool body 27 is moved to the vicinity of the surface (top face) of a work W, the contact member 97 comes into contact with the surface of the work W, and the spatter deposition inhibitor contained (kept) in the contact member 97 is applied to the surface of the work W. The application tool body 27 is further moved to the work W so that the front end face of the application tool body 27 comes into contact with the surface of the work W and the sliding shaft member 95 retreats. The introduction hole 101 of the sliding shaft member 95 communicates with the reservoir 92 and the spatter deposition inhibitor in the reservoir 92 is fed into the contact member 97 in the burying hole 99.

Accordingly, the contact member 97 contains the spatter deposition inhibitor not more than necessity and a proper amount of the spatter deposition inhibitor is always applied to a piercing position on the surface of the work W.

### (Sixth Embodiment)

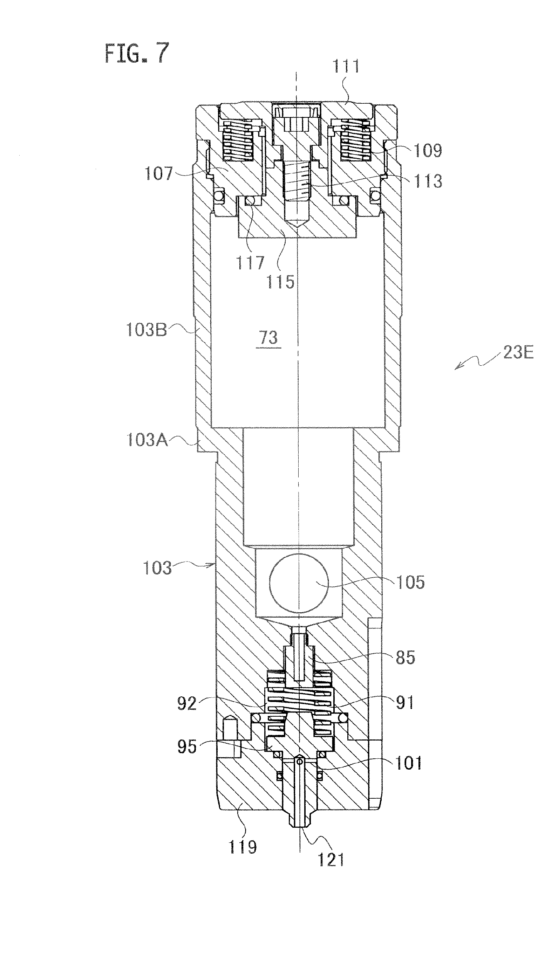

Figure 7 illustrates an application tool according to the sixth embodiment. In the application tool 23E of the sixth embodiment, elements having the same functions as those of the above mentioned application tools are represented with the same reference marks to omit overlapping explanations.

In the application tool 23E of the sixth embodiment, the above-mentioned tank member 72 and application tool body 27 are integrated into one. Namely, an application tool body 103 of the application tool 23E has a large-diameter bottom 103A corresponding to the above-mentioned flange 27F, and on which, a large-diameter cylinder 103B having a chamber 73 is integrally formed. In the vicinity of the bottom of the chamber 73, the application tool body 103 has an inspection hole 105 which is closed with a proper transparent member such as a transparent plastic member.

With the above-mentioned configuration, the inspection hole 105 allows a remaining quantity of a spatter deposition inhibitor contained in the chamber 73 to be observed. When the quantity is small, the spatter deposition inhibitor must be replenished. For this, a lid member 107 is removably screwed to an upper opening of the chamber 73. The lid member 107 is provided with a head member 111 that is vertically movable and is always upwardly pushed with a resilient member 109 such as a coil spring. Arranged at a central part of the head member 111 is an adjust screw 113 which is only rotatable.

Screwed to a lower part of the adjust screw 113 is an open/close valve member 115 that protrudes into the chamber 73 and is vertically adjustable. Arranged on an upper face of the open/close valve member 115 is a seal member 117 such as an O-ring that comes into contact with and away from a lower face of the lid member 107.

When the head member 111 is lowered against the resilient member 109, the seal member 117 separates away from the lower face of the lid member 107 to communicate the inside of the chamber 73 to the outside and take outside air into the chamber 73. Adjusting a screwed state between the adjust screw 113 and the open/close valve member 115 results in adjusting a protrusion height of the head member 111 relative to the upper face of the lid member 107.

Removably attached to a lower face of the application tool body 103 with a plurality of fixtures (not illustrated) such as bolts is a shaft holder 119 having a sliding shaft member 95 that is vertically movable. The sliding shaft member 95 serves as a contact member instead of the above-mentioned contact member 97. Opened at a lower end face of the sliding shaft member 95 is a communication hole 121 communicating with an introduction hole 101.

According to the above-mentioned configuration, the striker S pushes the head member 111, the head member 111 slightly lowers against the resilient member 109, and the chamber 73 communicates with the outside. When the top face of the head member 111 agrees with the top face of the lid member 107, the lid member 107 is also pushed by the striker S. Then, the application tool body 103 lowers, a front end (lower end) of the sliding shaft member 95 comes into contact with the top face of a work W and ascends against a resilient member 91, and the introduction hole 101 communicates with a reservoir chamber 92. As a result, the spatter deposition inhibitor in the reservoir 92 flows through the communication hole 121 and adheres to the surface of the work W.

As is understood from the above explanation, the application tool according to the present invention moves the contact member of the application tool toward the surface of a work, and when it comes into contact with the surface of the work, applies a spatter deposition inhibitor to the contact position on the surface of the work. In other words, the present invention applies the inhibitor to the work surface without rubbing the contact member along the work surface or without applying the inhibitor to an unnecessarily wider area on the work surface. With the contact operation of the contact member, the present invention applies the spatter deposition inhibitor to the work surface so that the spatter deposition inhibitor adheres to the work surface due to its own viscosity. Accordingly, no excessive amount of the spatter deposition inhibitor is applied to the work surface.

Accordingly, the present invention is capable of suppressing a consumption of the spatter deposition inhibitor and requires no downstream process of removing the spatter deposition inhibitor after a laser cutting process, thereby solving the problems of the related art mentioned above.

As mentioned above, the application tool can be used by arranging the same at a proper position on the laser-punch-combined processing machine 1, such as at a part of the punch holder or machine body. In this case, after punching a work and just before conducting a laser cutting process on the work, a spatter deposition inhibitor is applied to a piercing position of the work. Accordingly, the spatter deposition inhibitor never thinly spreads over the work due to vibration of the work during the punching process. When the work is laser-cut along a product contour containing the punched position, spatters produced during the piercing process are effectively prevented from depositing on the work.

The application tool can be arranged on or in the vicinity of a laser processing head of a laser processing machine to effectively prevent spatters from depositing on a work when the work is subjected to a piercing process that is carried out at the start of a laser cutting process.

In this way, the present invention brings the contact member arranged at a front end of the application tool into contact with a piercing position set on a work, thereby applying a spatter deposition inhibitor to the piercing position. Accordingly, the present invention is capable of minimizing an applied area of the spatter deposition inhibitor on the work and reducing an applied quantity of the spatter deposition inhibitor to the work. Consequently, the present invention is capable of preventing spatters from depositing on the surface of a work, reducing a consumption of a spatter deposition inhibitor, and eliminating a downstream process of removing the spatter deposition inhibitor from the work surface, thereby improving efficiency.

### (United States Designation)

In connection with United States designation, this international patent application claims the benefit of priority under 35 U.S.C. 119(a) to Japanese Patent Applications No. 2011-226523 filed on October 14, 2011 and No. 2011-226531 filed on the same day, the disclosed contents of them both being cited herein.

## Claims

1. A laser-punch processing method for processing a sheet work with a laser-punch-combined processing machine, **characterized in that** the method comprises:
(a) a process of carrying out a punching process on the work;
(b) a process of positioning a laser cutting start position of the work under an application tool body that is vertically movably provided for the laser-punch-combined processing machine, bringing an application tool contact part of the application tool body into contact with a top face of the work, and applying a spatter deposition inhibitor of the application tool contact part to a predetermined range around the laser cutting start position; and
(c) a process of laser-cutting the work along a product contour that contains the punching process position.

2. The laser-punch processing method according to claim 1, **characterized in that** applying the spatter deposition inhibitor to the laser cutting start position is carried out without moving the application tool contact part along the top face of the work.

3. A laser-punch-combined processing machine for carrying out a laser cutting process and punching process on a sheet work, **characterized in that** the combined processing machine comprises:
an application tool body vertically movably arranged on a punch holder of the combined processing machine, the application tool body being pressed and lowered by a striker that is vertically movably arranged on the combined processing machine; and
an application tool contact part arranged at a lower part of the application tool body, the application tool contact part being able to be brought into contact with a top face of the work to apply a spatter deposition inhibitor to the top face of the work.

4. A laser-punch-combined processing machine for carrying out a laser cutting process and punching process on a sheet work, **characterized in that** the combined processing machine comprises:
an application tool body vertically movably arranged at a part of a frame body of the combined processing machine, the application tool body being pressed and lowered by a vertical motion actuator arranged on the frame body; and
an application tool contact part arranged at a lower part of the application tool body, the application tool contact part being able to be brought into contact with a top face of the work to apply a spatter deposition inhibitor to the top face of the work.

5. The laser-punch-combined processing machine according to claim 3 or 4, **characterized in that** the application tool contact part is sized to apply the spatter deposition inhibitor in a range of at least 3 mm in diameter onto the top face of the work when brought into contact with the top face of the work.

6. A piercing method of laser-piercing a sheet work, **characterized in that** the method comprises:
(a) a process of moving an application tool toward the work, the work being able to be moved and positioned in X- and Y-axis directions relative to a laser processing head, and the application tool being arranged to be movable in a Z-axis direction toward and away from the work;
(b) a process of bringing a contact member arranged at a front end of the application tool into contact with a piercing position of the work and applying a spatter deposition inhibitor kept in the contact member to a surrounding area containing the piercing position; and
(c) a process of moving and positioning the piercing position of the work where the spatter deposition inhibitor has been applied to a position corresponding to the laser processing head and starting a laser-piercing process on the work.

7. The piercing method according to claim 6, **characterized in that** applying the spatter deposition inhibitor to the piercing position is carried out only by the contact motion without moving the contact member along the inhibitor applied face of the work.

8. An application tool used for the piercing method according to claim 6 or 7, **characterized in that**: the application tool comprises:
a cylindrical application tool body supported with a part of a machine body of a laser processing machine having a laser processing head that is movable in X-, Y-, and Z-axis directions relative to a sheet work, the cylindrical application tool body being movable in the same direction as a direction in which the laser processing head emits a laser beam toward the work; and
a contact member arranged at a front end of a contact member holder that is arranged in the application tool body, the contact member holder being movable in a longitudinal direction of the application tool body, and the contact member keeping a spatter deposition inhibitor to be applied to the work.

9. The application tool according to claim 8, **characterized in that** the application tool body has a flange that is supported with a lifter spring provided for a punch holder that vertically movably supports a punch that is used for punching the work.

10. The application tool according to claim 9, **characterized in that** the application tool has a head member at an upper end thereof, the head member being pressed by a striker that is vertically movable to hit and press the punch.
